# EUROPÄISCHE PATENTSCHRIFT

(11) **EP 1 597 050 B1**
(45) Veröffentlichungstag und Bekanntmachung des Hinweises auf die Patenterteilung: **28.06.2006**
(21) Anmeldenummer: 04712516.6
(22) Anmeldetag: 19.02.2004
(51) Int. Cl.: B29C 45/17, B29C 45/03, B28B 3/26, B22D 17/26

(54) **FORMSCHLIESSEINHEIT FÜR EINE SPRITZGIESSMASCHINE ZUR VERARBEITUNG VON KUNSTSTOFFEN**
MOLD-CLOSING DEVICE FOR AN INJECTION MOLDING MACHINE USED FOR PROCESSING PLASTIC MATERIALS
UNITE DE FERMETURE DE MOULE CONCUE POUR UNE MACHINE DE MOULAGE PAR INJECTION SERVANT A FACONNER DES MATERIAUX PLASTIQUES

(30) Priorität: 25.02.2003 DE 10309906
(43) Veröffentlichungstag der Anmeldung: 23.11.2005
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2004/001568
(87) Internationale Veröffentlichungsnummer: WO 2004/076157

(56) Entgegenhaltungen:
- WO-A-95/07171
- US-A- 3 852 010
- "ZEHN ARBEITSSTELLUNGEN BEI SPRITZGIESSMASCHINEN" PLASTVERARBEITER, ZEHNER AND HUETHIG VERLAG, SPEYER AM RHEIN, DE, Bd. 21, Nr. 11, November 1970 (1970-11), Seiten 995-999, XP001173212 ISSN: 0032-1338
- PATENT ABSTRACTS OF JAPAN Bd. 2000, Nr. 26, 1. Juli 2002 (2002-07-01) & JP 2001 239561 A (TOSHIBA MACH CO LTD), 4. September 2001 (2001-09-04)

## Beschreibung

Die Erfindung betrifft eine Formschließeinheit für eine Spritzgießmaschine zur Verarbeitung von Kunststoffen und anderer plastifizierbarer Massen wie keramische oder pulvrige Massen nach dem Oberbegriff des Anspruches 1.

Aus der EP 1 121 237 B1 oder der DE 21 33 540 A ist der übliche Aufbau einer Kunststoffspritzgießmaschine bekannt, wie sie dem Oberbegriff des Anspruches 1 zugrunde liegt. Bei einer derartigen Spritzgießmaschine ist ein stationärer Formträger vorgesehen, der mit dem Maschinenfuß fest verbunden ist. Ein an einem Abstützelement abgestützter Schließmechanismus bewegt einen beweglichen Formträger auf diesen stationären Formträger zyklisch zu und von diesem weg und schließt dadurch die zwischen den Formträgem aufgenommene Spritzgießform. Spritzgießseitig liegt am stationären Formträger eine Spritzgießeinheit an, um durch eine Durchbrechung des stationären Formträgers plastifiziertes Material in den Formhohlraum der Spritzgießform einzuspritzen. Am stationären Formträger orientiert sich die winklige Ausrichtung sowie auch die Längsausrichtung der Maschine auf dem Maschinenfuß. Beim Aufbau des Schließdrucks werden zwangsläufig die Holme, die die Formträger miteinander verbinden, gelängt. Diese Holmlängung führt zu einer Bewegung des Abstützelements in horizontaler Richtung.

Beim Spritzgießen ist grundsätzlich ein präziser Formschluss für die Qualität der hergestellten Teile von Bedeutung. Insofern ist sicher zu stellen, dass die Formträger parallel und nicht winklig zueinander angeordnet sind. Die erforderliche Winkeltreue ist mit bekannten Spritzgießmaschinen durchaus zu verwirklichen, jedoch kann es bei bestehenden Systemen zu Parallelogrammverschiebungen zwischen Abstützelement, stationärem und beweglichem Formträger kommen. Diese Problematik besteht insbesondere, wenn die Formschließeinheit in eine Vertikalanordnung überführt wird. In diesem Fall kann die feste Platte durch die Fußbefestigung abkippen und es entsteht somit ein Parallelogramm. Dies erschwert die Einstellung der Parallelität der Formträger und gleichzeitig auch die Einhaltung der Koaxialität der beiden Zentrierbohrungen in den Formträgern.

Ausgehend von diesem Stand der Technik liegt der vorliegenden Erfindung die Aufgabe zugrunde, eine Fonnschließeirtheit zu schaffen, die eine genaue Ausrichtung der Formträger zueinander erlaubt.

Diese Aufgabe wird durch eine Formschließeinheit mit den Merkmalen des Anspruchs 1 gelöst.

Das Abstützelement wird nun zum Festpunkt innerhalb des Systems, so dass auch der bisher stationäre Formträger gegenüber dem Maschinenfuß beweglich gelagert ist. Gleichzeitig kann die Abstützplatte an vorzugsweise drei Punkten auf dem Maschinengestell oder einem Teil davon befestigt und eingestellt werden. Durch den Stellmechanismus kann die Winkligkeit des Abstützelements eingestellt werden. Die Holmdehnung wirkt sich auf den "stationären" Formträger aus, so dass sich dieser zyklisch bewegt. Da jedoch die Spritzgießeinheit mit diesem Formträger fest verbunden ist, führt dies zu keinem Referenzproblem im Hinblick auf die Spritzgießeinheit.

Bei einer Ausgestaltung nach den Ansprüchen 3 und 4 ergibt sich damit eine Drei-Punkt-Abstützung des Abstützelements, die eine genaue Einstellung ermöglicht.

Dies wirkt sich insbesondere dann aus, wenn die Formschließeinheit in eine vertikale Stellung überführt werden muss oder sich auf Dauer in dieser befindet. Durch die Drei-Punkt-Abstützung des Abstützelements ist das Abstützelement in seinem Winkel gegenüber dem Maschinenfuß oder einem verschwenkbaren Auflageelement (Anspruch 9) so gehalten, dass kein Parallelogramm entsteht. Das gesamte Gewicht der Spritzgießform und der Formträger ist vielmehr zentral über die Holme am Abstützelement abgestützt. Damit ist auch in dieser Stellung eine optimale Parallelität und Zentrizität gewährleistet.

Weitere Vorteile ergeben sich aus den Unteransprüchen und der folgenden Beschreibung.

Im folgenden wird die Erfindung anhand der Figuren näher erläutert. Es zeigen:
- Fig. 1: Eine dreidimensionale Ansicht einer Kunststoffspritzgießmaschine mit Formschließeinheit und Spritzgießeinheit,
- Fig. 2: Eine Darstellung gemäß Fig. 1 mit in vertikale Position verschwenkter Formschließeinheit,
- Fig. 3: Eine dreidimensionale Ansicht des Maschinenfußes mit Abstützelement,
- Fig. 4: Eine Darstellung gemäß Fig. 3 mit in Vertikalposition verschwenktem Abstützelement,
- Fig. 5, 6: Seitenansichten der Darstellung gemäß Fig. 3, 4,
- Fig. 7: Einen vergrößerten, teilweise geschnittenen Ausschnitt aus Fig. 6,
- Fig. 8: Eine Draufsicht auf den Maschinenfuß bei abgenommener Formschließeinheit.

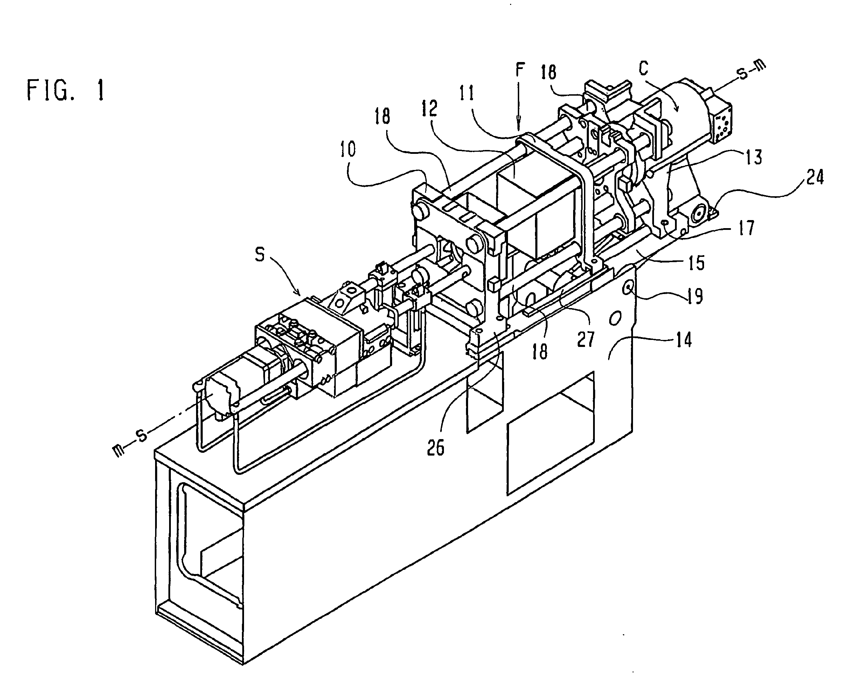

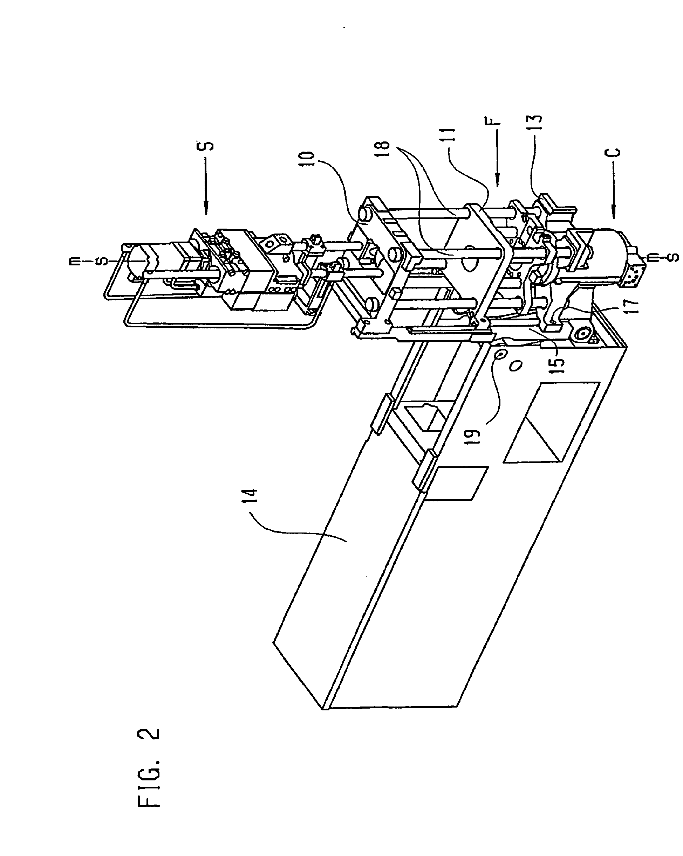

Die Figuren 1 und 2 zeigen eine Spritzgießmaschine zur Verarbeitung von Kunststoffen und anderer plastifizierbarer Massen wie keramischer oder pulvriger Massen mit einer Formschließeinheit F und einer Spritzgießeinheit S. In Fig. 2 ist die in Fig. 1 horizontal angeordnete Formschließeinheit in eine vertikale Stellung verschwenkt. Auf den hierfür erforderlichen Schwenkmechanismus 20 wird später noch eingegangen.

Die Spritzgießmaschine besitzt einen ersten Formträger 10, an dem die Spritzgießeinheit S vorzugsweise befestigt ist. Ferner ist ein weiterer beweglicher Formträger 11 vorgesehen, der mittels eines Formschließmechanismus C relativ zum ersten Formträger 10 beweglich ist. Zwischen den Formträgern 10, 11 ist ein Formspannraum vorgesehen, in dem wenigstens eine mehrteilige Spritzgießform zwischen den Formträgem aufnehmbar ist, wobei die Teile der Spritzgießform 12 an den Formträgern 10, 11 lösbar befestigt sind. Für den Formschließmechanismus C ist ein Abstützelement 13 vorgesehen. Der Formschließmechanismus C dient zum zyklischen Öffnen und Schließen der Spritzgießform 13 unter Bewegung des weiteren, beweglichen Formträgers 11 auf den ersten Formträger 10 zu und von diesem weg in Schließrichtung s-s der Spritzgießform 12.

Formschließeinheit F und Spritzgießeinheit S sind auf einem Maschinenfuß 14 und ggf. einem Teil des Maschinenfußes angeordnet. Auf dem Maschinenfuß sind insbesondere der erste Formträger 10, der weitere bewegliche Formträger 11 und das Abstützelement 13 gelagert. Kraftübertragungselemente, die im Ausführungsbeispiel als Holme 18 vorgesehen sind, nehmen die beim Formschluss und beim Einspritzen der plastifizierbaren Masse in die Spritzgießform 12 auftretenden Kräfte zwischen erstem Formträger 10 und Abstützelement 13 auf. Anstelle der Holme 18 kann auch ein bügelförmiges Kraftübertragungselement vorgesehen werden, das einen freien Zugang zum Formspannraum erlaubt.

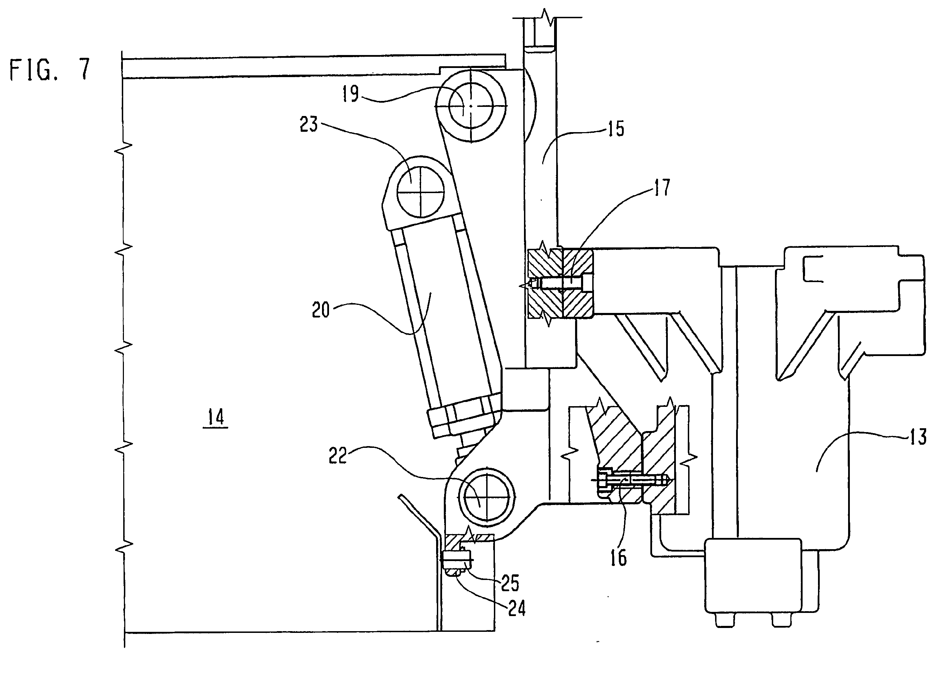

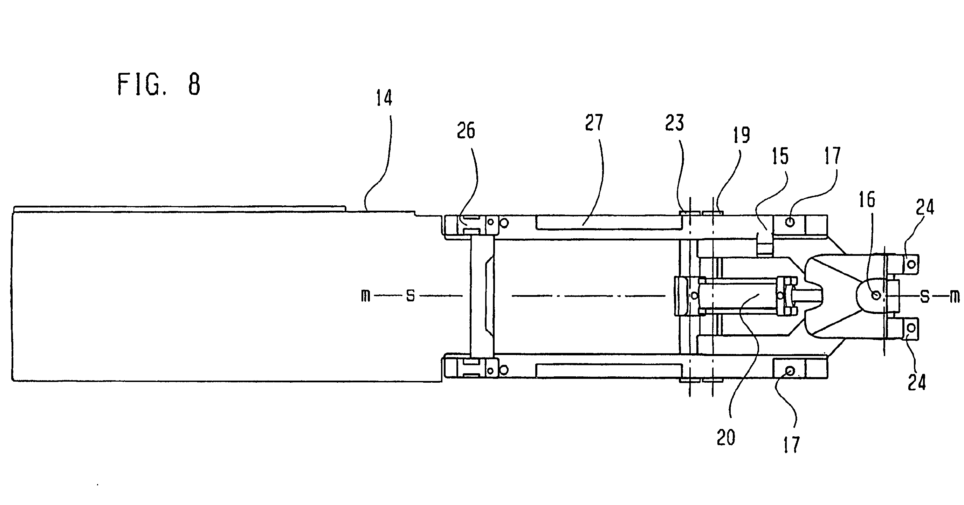

Insbesondere Fig. 8 zeigt, dass auch der erste Formträger 10 in Schließrichtung s-s beweglich auf dem Maschinenfuß oder einem Teil desselben gelagert ist. Damit sind beide Formträger in Schließrichtung beweglich gelagert. Das Abstützelement 13 hingegen ist über eine stationäre Lagerung an den Lagerpunkten 17 am Maschinenfuß 14 oder an einem Teil davon, wie z. B. dem Auflageelement 15 befestigt. Ferner ist ein Stellmechanismus 16 (Fig. 7) zur Einstellung des Winkels zwischen Abstützelement 13 und dem Maschinenfuß 14 oder dem Teil des Maschinenfußes vorgesehen. Gemäß Fig. 7 und 8 ist die stationäre Lagerung des Abstützelements 13 am Maschinenfuß 14 oder dessen Teil vom Stellmechanismus 16 in Schließrichtung s-s beabstandet. Die stationäre Lagerung des Abstützelements 13 erfolgt an den Lagerpunkten 17, die beidseits einer Mittellinie m-m angeordnet sind und deren Verbindungslinie im rechten Winkel zur Schließrichtung s-s steht. Die beiden Lagerpunkte 17 und der Stellmechanismus 16 als dritter Punkt bilden damit eine Drei-Punkt-Lagerung, die eine exakte Einstellung des Abstützelements gegenüber dem Maschinenfuß erlaubt. Vorzugsweise ist das Abstützelement aus einem Stück gebildet, wie dies aus der älteren Patentanmeldung DE 102 09 921 bekannt ist. Nach der dortigen Lösung ist das Abstützelement selbst auch einstückig und kompakt ausgebildet, so dass sich eine hohe Maßgenauigkeit der Auflageflächen ergibt. Grundsätzlich kann der Stellmechanismus 16 aber auch an einem anderen Teil der Formschließeinheit F angreifen, das mit dem Abstützelement vorzugsweise in fester Verbindung steht.

Damit ist durch die Drei-Punkt-Lagerung zunächst gewährleitstet, dass über die Lagerpunkte 17 eine Anordnung im rechten Winkel zur Mittellinie der Spritzgießmaschine gewährleistet ist, während über den dritten Punkt, also über den Stellmechanismus 16 die Winkligkeit der Platte einstellbar ist. Aufgrund des kompakten Abstützelements ergibt sich gleichzeitig eine breite Abstützbasis, die auch den Anforderungen im Vertikalbetrieb genügt. Das Abstützelement ist insofern in sich stabil und es entsteht kein Parallelogramm, da das ganze Gewicht von Spritzgießform und Formträgem sich zentral über die vier Holme 18 zum Abstützelement abstützt. Damit ist eine optimale Parallelität und Zentrizität gewährleistet.

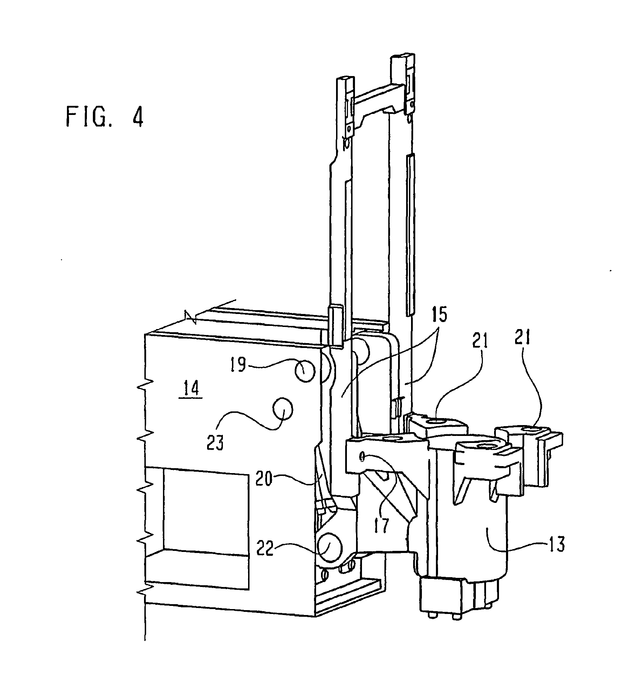

Gemäß Fig. 7 ist der Stellmechanismus 16 als Höhenverstellung für einen von der stationären Lagerung beabstandeten Teil des Abstützelements 13 ausgebildet. Ggf. kann es sich bei diesem Teil aber auch um ein weiteres mit dem Abstützelement in Verbindung stehendes Teil der Formschließeinheit handeln. Die Figuren 2, 4, 6 und 7 zeigen die Anordnung der Formschließeinheit in vertikaler Stellung. Grundsätzlich kann eine fest stehende Anordnung des Abstützelements ohne Schwenkmechanismus ebenso vorgesehen werden, in den Ausführungsbeispielen ist jedoch die Formschließeinheit, zumindest aber das Abstützelement 13 auf einem Teil des Maschinenfußes 14, einem verschwenkbaren Auflageelement 15 gelagert. Dieses Auflageelement 15 erlaubt bei Verschwenkung eine Überführung zumindest der Formschließeinheit F aus einer horizontalen Stellung der Schließrichtung s-s in eine vertikale Stellung. Bei dieser Verschwenkung kann - wie im Ausführungsbeispiel gemäß Fig. 2 - die Spritzgießeinheit S mit verschwenkt werden, wenn sie am ersten Formträger 10 befestigt ist, grundsätzlich kann aber auch ein Einspritzen in die Trennebene erfolgen.

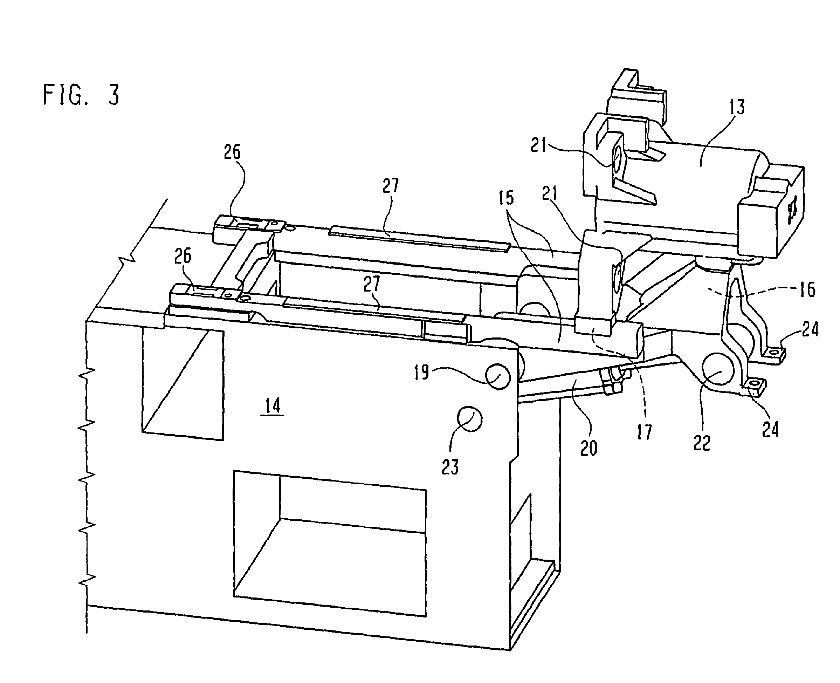

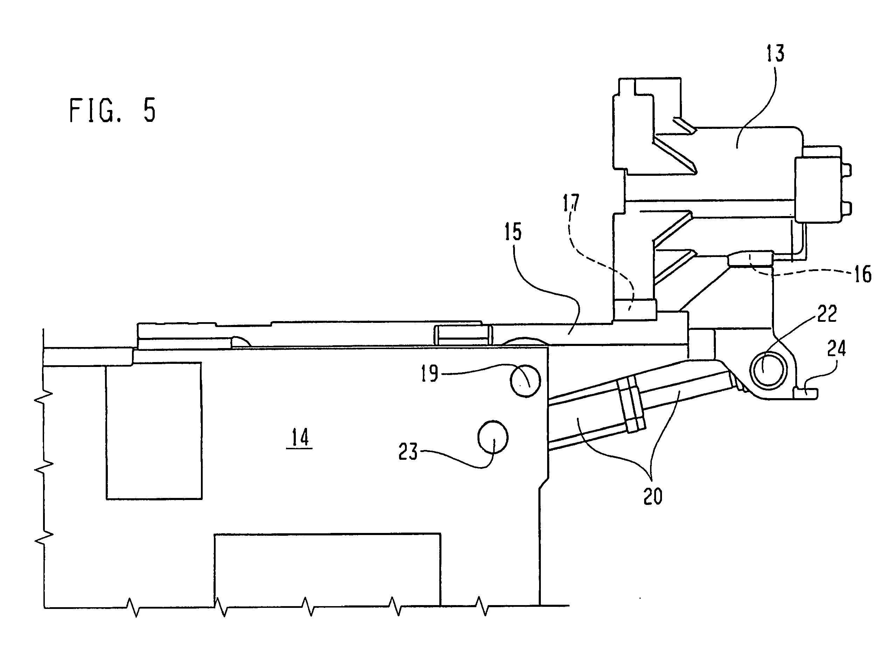

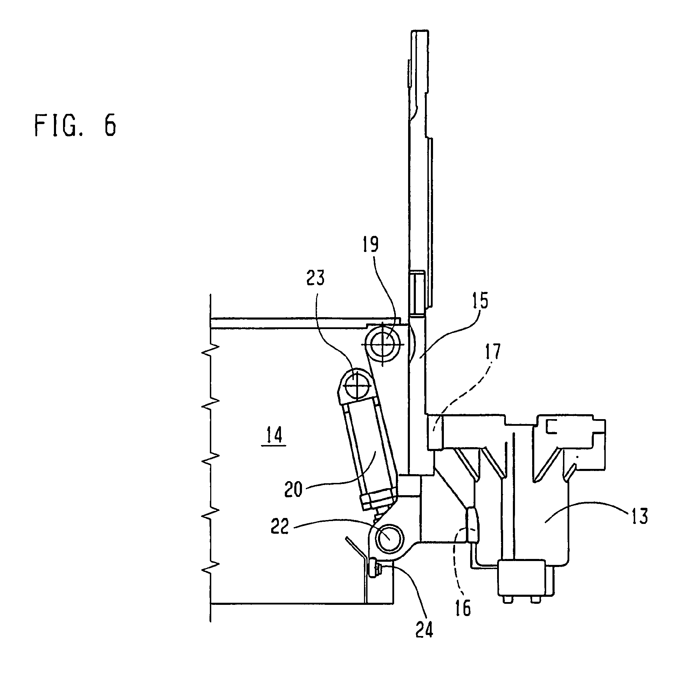

Die Figuren 3 bis 7 zeigen den Schwenkmechanismus 20. Das Auflageelement 15 ist in die Schwenkachse 19 gegenüber dem Maschinenfuß drehbeweglich. Der Schwenkmechanismus 20 ist an den Schwenkachsen 22, 23 am Abstützelement 13 und am Maschinenfuß gelagert, so dass bei Betätigung des Schwenkmechanismus 20 wie in den Figuren 5 und 6 dargestellt die Überführung aus der horizontalen Stellung in die vertikale Stellung erfolgt. Das Abstützelement 13 besitzt Holmaufnahmen 21 und an seinem hinteren Ende auch Anlagen 24, die bei der Überführung in die Vertikalbewegung an einer Anlagefläche des Maschinenfuß 14 zur Anlage kommen. Gemäß Fig. 7 können an den Anlageflächen 24 Justierelemente 25 vorgesehen sein, um die Anlage zu justieren. Fig. 7 zeigt die Befestigung an den Lagerpunkten 17 sowie den Stellmechanismus 16 für das Abstützelement 13.

Gemäß Fig. 8 sind Lagerungselemente 26 für den ersten Formträger 10 sowie eine Führung 27 für den weiteren, beweglichen Formträger 11 vorgesehen. Diese sind im Ausführungsbeispiel an einem Schwenktisch als Auflageelement 15 angeordnet. Grundsätzlich kann aber auch nur der hintere Teil des Auflageelements 15 verwendet werden, der das eigentliche Abstützelement 13 trägt, da die Führung der Formträger unmittelbar auf entsprechende Flächen des Maschinenfußes 14 erfolgt. Bei vertikaler Anordnung erfolgt die Abstützung ohnehin über die Holme auf das Abstützelement, so dass eine weitere Führung der Formträger nicht erforderlich ist.

### Bezugszeichenliste

- 10: Erster Formträger
- 11: Weiterer, beweglicher Formträger
- 12: Spritzgießform
- 13: Abstützelement
- 14: Maschinenfuß
- 15: Auflageelement
- 16: Stellmechanismus
- 17: Lagerpunkt
- 18: Holm
- 19: Schwenkachse
- 20: Schwenkmechanismus
- 21: Holmaufnahme
- 22, 23: Anlenkung für 20
- 24: Anlage
- 25: Justierelement
- 26: Lagerung für 10
- 27: Führung für 11
- C: Formschließmechanismus
- F: Formschließeinheit
- S: Spritzgießeinheit
- m-m: Mittellinie
- s-s: Schließrichtung

## Patentansprüche

1. Formschließeinheit für eine Spritzgießmaschine zur Verarbeitung von Kunststoffen und anderen plastifizierbaren Massen wie keramische oder pulvrige Massen mit
- einem ersten Formträger (10),
- einem weiteren, beweglichen Formträger (11), der relativ zum ersten Formträger (10) beweglich ist, wenigstens einer mehrteiligen Spritzgießform (12), die zwischen dem ersten Formträger (10) und dem weiteren, beweglichen Formträger (11) aufnehmbar ist und deren Teile an den Formträgem lösbar befestigt sind,
- einem Abstützelement (13) für einen Formschließmechanismus (C) zum zyklischen Öffnen und Schließen der Spritzgießform (12) unter Bewegung des weiteren, beweglichen Formträgers (11) auf den ersten Formträger (10) zu und von diesem weg in Schließrichtung (s-s) der Spritzgießform (12)
- einem ggf. mehrteiligen Maschinenfuß (14), an dem der erste Formträger (10), der weitere, bewegliche Formträger (11) und das Abstützelement (13) gelagert sind,
**dadurch gekennzeichnet, dass** auch der erste Formträger (10) in Schließrichtung (s-s) beweglich am Maschinenfuß (14) gelagert ist und das Abstützelement (13) über eine stationäre Lagerung am Maschinenfuß (14) gelagert ist und dass ein Stellmechanismus (16) zur Einstellung des Winkels zwischen Abstützelement (13) und Maschinenfuß (14) oder dessen Teil vorgesehen ist.

2. Formschließeinheit nach Anspruch 1, **dadurch gekennzeichnet, dass** der erste Formträger (10), der weitere, bewegliche Formträger (11) und das Abstützelement (13) an verschiedenen Teilen des Maschinenfuß gelagert sind, und dass der Stellmechanismus (16) zur Einstellung des Winkels zwischen Abstützelement (13) und Maschinenfuß (14) oder dessen Teil vorgesehen ist.

3. Formschließeinheit nach Anspruch 1 oder 2, **dadurch gekennzeichnet, dass** die stationäre Lagerung (Lagerpunkt 17) des Abstützelements (13) am Maschinenfuß (14) vom Stellmechanismus (16) in Schließrichtung (s-s) beabstandet ist.

4. Formschließeinheit nach einem der vorhergehenden Ansprüche, **dadurch gekennzeichnet, dass** die stationäre Lagerung des Abstützelements (13) an wenigstens zwei Lagerpunkten (17) erfolgt, die beidseits einer Mittellinie (m-m) angeordnet sind und deren Verbindungslinie im rechten Winkel zur Schließrichtung (s-s) steht.

5. Formschließeinheit nach Anspruch 4, **dadurch gekennzeichnet, dass** die zwei Lagerpunkte (17) der stationären Lagerung des Abstützelements (13) und die Lagerung des Abstützelements (13) über den als dritten Punkt ausgebildeten Stellmechanismus (16) einen Drei-Punkt-Lagerung bilden.

6. Formschließeinheit nach einem der vorhergehenden Ansprüche, **dadurch gekennzeichnet, dass** durch die Verbindung des Abstützelements (13) mit den Formträgem über vorzugsweise als Holme (18) ausgebildete Kraftübertragungselemente die Parallelität der Formträger mittels des Stellmechanismus (16) einstellbar ist.

7. Formschließeinheit nach einem der vorhergehenden Ansprüche, **dadurch gekennzeichnet, dass** der Stellmechanismus (16) eine Höhenverstellung für einen von der stationären Lagerung beabstandeten Teil des Abstützelements (13) oder ein mit dem Abstützelement in Verbindung stehendes Teil der Formschließeinheit ist.

8. Formschließeinheit nach einem der vorhergehenden Ansprüche, **dadurch gekennzeichnet, dass** bei Anlage der Düse einer Spritzgießeinheit (S) am ersten Formträger (10) der erste Formträger (10) ein relativer Nullpunkt für die Spritzgießeinheit ist.

9. Formschließeinheit nach einem der vorhergehenden Ansprüche, **dadurch gekennzeichnet, dass** ein Teil des Maschinenfußes (14) ein gegenüber dem restlichen Maschinenfuß verschwenkbares Auflageelement (15) ist, das bei Verschwenkung eine Überführung zumindest der Formschließeinheit (F) aus einer horizontalen Stellung der Schließrichtung (s-s) in eine vertikale Stellung der Schließrichtung (s-s) erlaubt.

10. Formschließeinheit nach Anspruch 9, **dadurch gekennzeichnet, dass** bei Verschwenkung die am ersten Formträger (10) befestigbare Spritzgießeinheit (S) mit verschwenkbar ist.

## Claims

1. Mould closing unit for an injection moulding machine for processing plastics materials and other plasticisable substances such as ceramic or pulverulent substances, said mould closing unit comprising
- a first mould carrier (10),
- an additional movable mould carrier (11) displaceable relative to the first mould carrier (10),
- at least one multi-part injection mould (12) receivable between the first mould carrier (10) and the additional, movable mould carrier (11), the parts of at least one multi-part injection mould (12) being detachably secured to the mould carriers,
- a supporting member (13) for a mould closing mechanism (C) for the cyclical opening and closing of the injection mould (12) with the displacement of the additional, movable mould carrier (11) towards the first mould carrier (10) and away from the said first mould carrier (10) in closing direction (s-s) of the injection mould (12),
- a machine base (14) and where applicable a part of the machine base, the first mould carrier (10), the additional, movable mould carrier (11) and the supporting member (13) being mounted on said machine base (14) or on said machine base (14) and said part thereof,
**characterised in that** the first mould carrier (10) is also mounted on the, where applicable, multi-part machine base (14) so as to be displaceable in the closing direction (s-s) and the supporting member (13) is mounted on the machine base (14) via a stationary bearing arrangement, and **in that** an adjusting mechanism (16) is provided for adjusting the angle between the supporting element (13) and the machine base (14).

2. Mould closing unit according to claim 1, **characterised in that** the first mould carrier (10), the additional, movable mould carrier (11) and the supporting element (13) are mounted on different parts of the machine base (14) and that the adjusting mechanism (16) is provided for adjusting the angle between the supporting element (13) and the machine base (14).

3. Mould closing unit according to claim 1 or 2, **characterised in that** the stationary bearing arrangement (bearing point 17) of the supporting member (13) on the machine base (14) or on the part thereof is spaced from the adjusting mechanism (16) in the closing direction (s-s).

4. Mould closing unit according to one of the preceding claims, **characterised in that** the stationary bearing arrangement of the supporting member (13) is effected at at least two bearing points (17) which are disposed on both sides of a central line (m-m) and the connecting line therebetween is at right angles to the closing direction (s-s).

5. Mould closing unit according to claim 4, **characterised in that** the two bearing points (17) of the stationary bearing arrangement of the supporting member (13) and the bearing arrangement of the supporting member (13) form a three-point bearing arrangement via the adjusting mechanism (16), which is the third point.

6. Mould closing unit according to one of the preceding claims, **characterised in that** through the connection between the supporting member (13) and the mould carriers by means of force transferring elements, which are preferably in the form of braces (18), the parallelity of the mould carriers is adjustable by the adjusting mechanism (16).

7. Mould closing unit according to one of the preceding claims, **characterised in that** the adjusting mechanism (16) is a vertical adjusting means for a part of the supporting member (13) that is spaced from the stationary bearing arrangement or for a part of the mould closing unit that is connected to the supporting member.

8. Mould closing unit according to one of the preceding claims, **characterised in that** when the nozzle of an injection moulding unit (S) is applied to the first mould carrier (10), the first mould carrier (10) is a relative neutral point for the injection moulding unit.

9. Mould closing unit according to one of the preceding claims, **characterised in that** the part of the machine base (14) is a bearing element (15), which is pivotable relative to the remaining machine base and which, when pivoted, allows a transferring of at least the mould closing unit (F) from a horizontal position of the closing direction (s-s) into a vertical position of the closing direction (s-s).

10. Mould closing unit according to claim 8, **characterised in that**, when pivoted, the injection moulding unit (S) secured to the first mould carrier (10) is also pivotable at the same time.

## Revendications

1. Unité de fermeture de moule pour une machine de moulage par injection pour le traitement de matières plastiques et d'autres masses plastifiables telles que des masses céramiques ou pulvérulentes, comprenant
- un premier porte-moule (10),
- un autre porte-moule mobile (11), lequel est mobile relativement au premier porte-moule (10),
- au moins un moule de moulage par injection (12) en plusieurs parties, lequel peut être logé entre le premier porte-moule (10) et l'autre porte-moule mobile (11) et dont les parties sont fixées de manière détachable aux porte-moules,
- un élément d'appui (13) pour un mécanisme de fermeture de moule (C) pour ouvrir et fermer cycliquement le moule de moulage par injection (12) en déplaçant l'autre porte-moule mobile (11) vers le premier porte-moule (10) et en l'en éloignant dans le sens de la fermeture (s-s) du moule de moulage par injection (12),
- un pied de machine (14), le cas échéant en plusieurs parties, sur lequel sont logés le premier porte-moule (10), l'autre porte-moule mobile (11) et l'élément d'appui (13),
**caractérisé en ce que** le premier porte-moule (10) est également logé sur le pied de machine (14) de manière mobile dans le sens de la fermeture (s-s) et l'élément d'appui (13) est logé par l'intermédiaire d'un logement fixe sur le pied de machine (14) et **en ce qu'**est prévu un mécanisme de réglage (16) pour régler l'angle entre l'élément d'appui (13) et le pied de machine (14) ou la partie de celui-ci.

2. Unité de fermeture de moule selon la revendication 1, **caractérisée en ce que** le premier porte-moule (10), l'autre porte-moule mobile (11) et l'élément d'appui (13) sont logés sur différentes parties du pied de machine et **en ce que** le mécanisme de réglage (16) est prévu pour régler l'angle entre l'élément d'appui (13) et le pied de machine (14) ou la partie de celui-ci.

3. Unité de fermeture de moule selon la revendication 1 ou 2, **caractérisée en ce que** le logement fixe (point de logement 17) de l'élément d'appui (13) sur le pied de machine (14) est distant du mécanisme de réglage (16) dans le sens de la fermeture (s-s).

4. Unité de fermeture de moule selon l'une des revendications précédentes; **caractérisée en ce que** le logement fixe de l'élément d'appui (13) se fait en au moins deux points de logement (17) qui sont disposés de part et d'autre d'une ligne médiane (m-m) et dont la ligne de liaison est à angle droit avec le sens de la fermeture (s-s).

5. Unité de fermeture de moule selon la revendication 4, **caractérisée en ce que** les deux points de logement (17) du logement fixe de l'élément d'appui (13) et le logement de l'élément d'appui (13) par l'intermédiaire du mécanisme de réglage (16) réalisé en tant que troisième point constituent un logement trois points.

6. Unité de fermeture de moule selon l'une des revendications précédentes, **caractérisée en ce que**, par la liaison entre l'élément d'appui (13) et les porte-moules par l'intermédiaire d'éléments de transmission de force réalisés de préférence en tant que colonnes (18), le parallélisme des porte-moules est réglable au moyen du mécanisme de réglage (16).

7. Unité de fermeture de moule selon l'une des revendications précédentes, **caractérisée en ce que** le mécanisme de réglage (16) est un réglage en hauteur pour une partie de l'élément d'appui (13) distante du logement fixe ou une pièce de l'unité de fermeture de moule en liaison avec l'élément d'appui.

8. Unité de fermeture de moule selon l'une des revendications précédentes, **caractérisée en ce que**, lorsque la buse d'une unité de moulage par injection (S) s'applique sur le premier porte-moule (10), le premier porte-moule (10) est un point zéro relatif pour l'unité de moulage par injection.

9. Unité de fermeture de moule selon l'une des revendications précédentes, **caractérisée en ce qu'**une partie du pied de machine (14) est un élément de support (15) pouvant subir un pivotement par rapport au reste du pied de machine et qui, en cas de pivotement, permet au moins à l'unité de fermeture de moule (F) de passer d'une position horizontale du sens de la fermeture (s-s) à une position verticale du sens de la fermeture (s-s).

10. Unité de fermeture de moule selon la revendication 9, **caractérisée en ce que**, en cas de pivotement, l'unité de moulage par injection (S) fixable sur le premier porte-moule (10) peut être entraînée en pivotement.
